# EUROPEAN PATENT SPECIFICATION

(11) **EP 2 302 991 B1**
(45) Date of publication and mention of the grant of the patent: **01.08.2012**
(21) Application number: 08777047.5
(22) Date of filing: 30.05.2008
(51) Int. Cl.: H05K 7/20, B01D 46/10

(54) **FILTER, COOLING JETTING MEMBER AND COOLING WIND JETTING METHOD**
FILTER, KÜHLJETGLIED UND KÜHLWINDJETVERFAHREN
FILTRE, ELEMENT A JET DE REFROIDISSEMENT ET PROCEDE A JET D' AIR DE REFROIDISSEMENT

(43) Date of publication of application: 30.03.2011
(73) Proprietor: NEC Display Solutions, Ltd., Minato-ku Tokyo 108-0023 (JP)
(72) Inventor: TAKAMATSU, Hiroaki, Tokyo 108-0023 (JP)
(74) Representative: Betten & Resch
(86) International application number: PCT/JP2008/060036
(87) International publication number: WO 2009/144815

(56) References cited:
- EP-A1- 1 640 796
- WO-A1-2008/047528
- JP-A- 3 029 397
- JP-A- 11 329 922
- JP-A- 2005 148 624

## Description

### TECHNICAL FIELD

The present invention relates to a technique for preventing an injection port that injects gas from becoming clogged.

### BACKGROUND ART

A cooling system for an electronic device such as a projector that uses a cooling pump can have a compact structure and inject cooling wind at a very high speed in comparison with such a cooling system that uses a cooling fan. The increase of the wind speed of the cooling wind can be accomplished by injecting from a very small injection port cooling wind that is delivered at low flow amount but at a high pressure from the cooling pump.

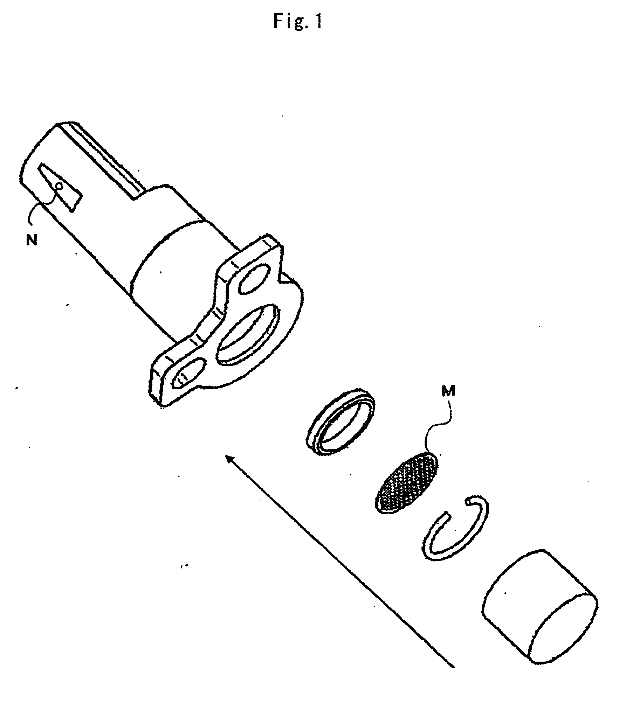

Since the injection port of the cooling system is very small, the injection port may become clogged with fine dust. Thus, the cooling system is provided with filter M (one of various types) that prevents clogging from taking place, and cooling wind from which dust has been collected by filter M is delivered to injection port N as shown in Fig. 1.

As exemplified in JP60-125221A (hereinafter referred to as Document 1) and in Fig. 2, mesh-shaped filter M is used as a clog-prevention filter. In addition, as disclosed in JP2002-119810A (hereinafter referred to as Document 2), a porous metallic filter and a foam filter are used.

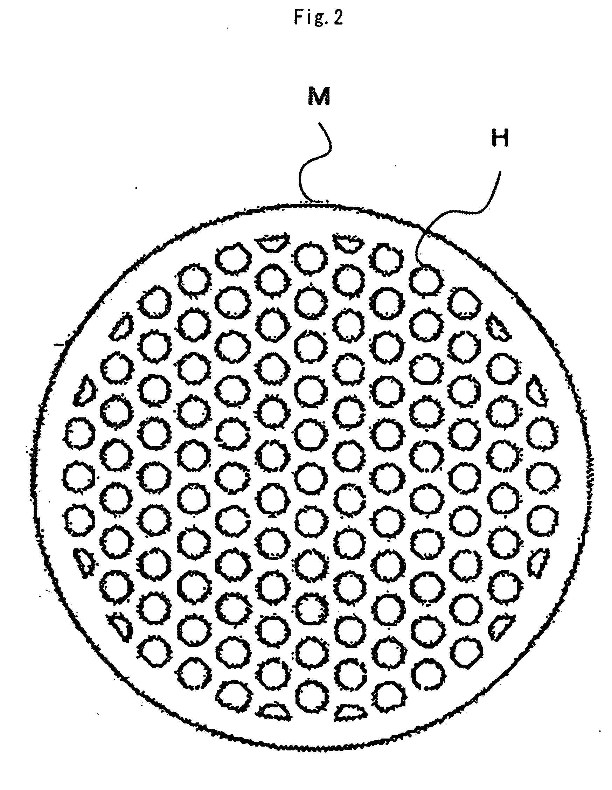

Since the diameter of each hole of these filters, for example, hole H shown in Fig. 2 is smaller than the caliber of injection port N, the cooling system can remove dust that is greater than the caliber of the injection port.

### DISCLOSURE OF THE INVENTION

However, fine dust smaller than the caliber of the injection port may pass through the holes of the filter described in Document 1 or Document 2. Thus, even with these filters, it is difficult to prevent the injection port from becoming clogged with fine dust that has been deposited in the injection port.

If the holes of the filter were excessively narrowed to enhance the clog-prevention effect, the filter would cause the pressure loss to increase, resulting in lowering the energy efficiency.

Thus, there was a problem in which the filter described in Document 1 or Document 2 could not satisfactorily prevent the injection port from becoming clogged with fine dust that had deposited therein.

### SUMMARY OF THE INVENTION

An object of the present invention is to provide a technique that can effectively prevent the injection port from becoming clogged.

To accomplish the foregoing object, a filter for of the present invention is a filter disposed between a wind blower and an injection port that injects cooling wind delivered from said wind blower and in which a plurality of opening portions are formed, wherein an area of said filter is greater than an area of said injection port, an area of each of said plurality of opening portions is smaller than the area of said injection port, and a total area of said plurality of opening portions is 1 to 5 times greater than the area of said injection port.

A cooling injection member of the present invention is a cooling injection member, comprising: a filter in which a plurality of opening portions are formed and that allows cooling wind delivered from a wind blower to pass through; and an injection port that injects said cooling wind that has passed through said filter, where the area of said filter is greater than the area of said injection port, the area of each of said plurality of opening portions is smaller than the area of said injection port, and the total area of said plurality of opening portions is 1 to 5 times greater than the area of said injection port.

A cooling wind injection method of the present invention is a cooling wind injection method, comprising: providing a wind blower and a filter disposed between said wind blower and an injection port that injects cooling wind delivered from said wind blower and in which a plurality of opening portions are formed; causing the area of said filter to be greater than the area of said injection port; causing the area of each of said plurality of opening portions to be smaller than the area of said injection opening; and causing a total area of each of said plurality of opening portions to be 1 to 5 times greater than the area of said injection port.

### BRIEF DESCRIPTION OF DRAWINGS

[Fig. 1] is a perspective view showing the structure of a conventional injection member.
[Fig. 2] is a front view of a filter disclosed in Document 1.
[Fig. 3] is an overall view showing the structure of a cooling system of a first embodiment.
[Fig. 4] is an overall view showing the structure of a lamp unit and an injection member of the first embodiment.
[Fig. 5] is a perspective view showing the structure of the injection member of the first embodiment.
[Fig. 6] is a sectional view of the injection member of the first embodiment.
[Fig. 7] is a front view of the injection member of the first embodiment.
[Fig. 8] is a table that compares characteristics of a metal filter of the first embodiment and characteristics of the filter of Document 1.
[Fig. 9] is a view showing the flow of cooling wind in the vicinity of punched holes of the first embodiment.
[Fig. 10] is a view showing the flow of cooling wind in the vicinity of punched holes of the filter of Document 1.
[Fig. 11] is a view showing a metal filter of the first embodiment, on which fine grains have been deposited.
[Fig. 12] is a perspective view showing the structure of an injection member of a second embodiment.
[Fig. 13] is a view describing a method that fixes a metal filter of the second embodiment
[Fig. 14] is a view showing the metal filter of the second embodiment, on which fine grains have been deposited.
[Fig. 15] is a perspective view showing the structure of an injection member of a third embodiment.
[Fig. 16] is a front view of a masking plate of the third embodiment.
[Fig. 17] is a view showing the masking plate of the third embodiment, on which fine grains have been deposited.

### DESCRIPTION OF EMBODIMENTS

Next, with reference to drawings, embodiments of the present invention will be described in detail.

### (First Embodiment)

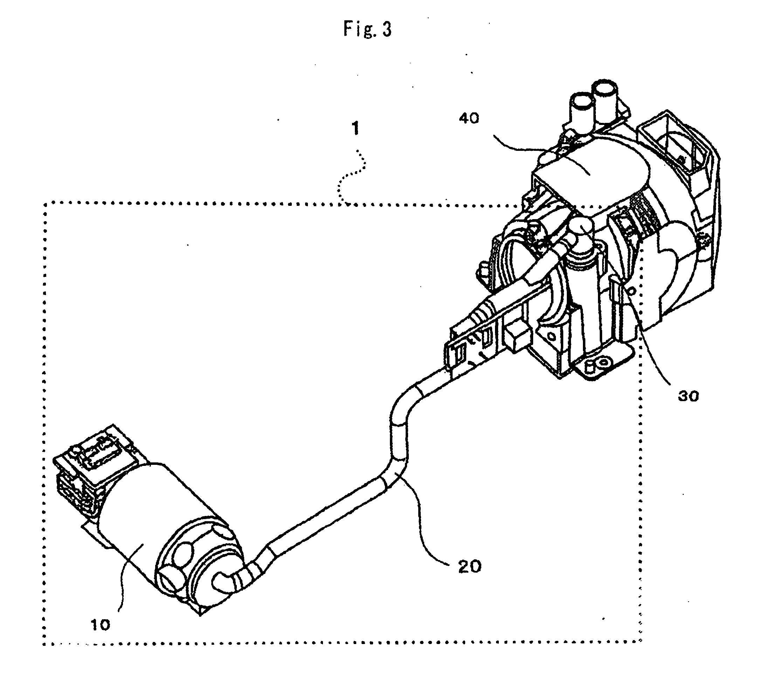

Fig. 3 is an overall view showing the structure of cooling system 1 of the first embodiment. Cooling system 1 is a system that cools an electronic device such as a projector and is incorporated therein for use. Referring to the same drawing, cooling system 1 has wind blower 10, silicon tube 20, and injection member 30. In addition, cooling system 1 is mounted on lamp unit 40.

Wind blower 10 is, for example, a diaphragm type pump and delivers gas as cooling wind, that cools lamp unit 40, to injection member 30 through silicon tube 20.

Silicon tube 20 is a tube that is made of silicon and that connects wind blower 10 and injection member 30.

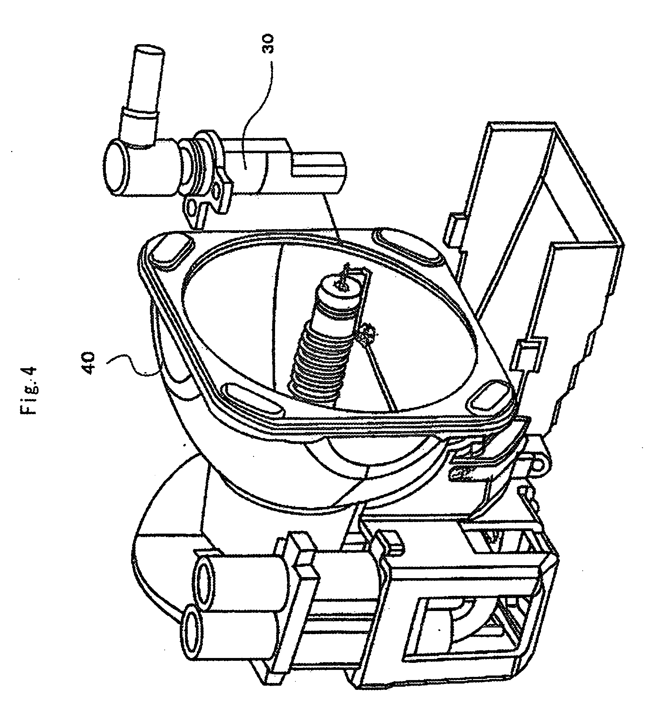

Fig. 4 is an enlarged view of injection member 30 and lamp unit 40. Referring to the drawing, injection member 30 cools lamp unit 40 by injecting cooling wind delivered from wind blower 10 to lamp unit 40.

Lamp unit 40 is used as a light source for an electronic device and is a part that cooling system 1 cools as a cooling target.

Of course, cooling system 1 can cool as a cooling target a member other than lamp unit 40 in the electronic device.

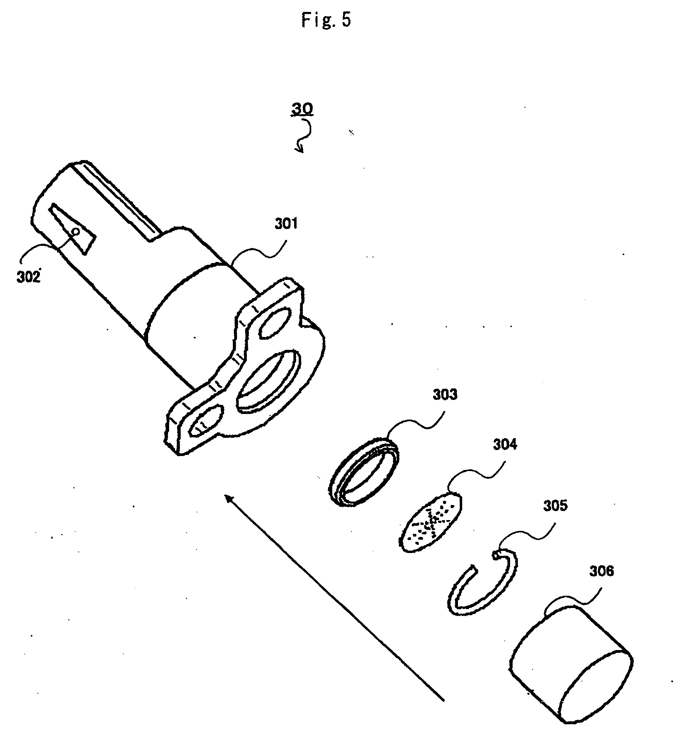

Fig. 5 is a perspective view showing the structure of injection member 30. Referring to the drawing, injection member 30 has main body 301, injection port 302, spacer 303, metal filter 304, retaining ring 305, and foam filter 306. The arrow in the drawing represents the direction in which cooling wind is delivered.

Main body 301 is a cylindrical member that passes through cooling wind delivered from wind blower 10 and has injection port 302 at its side position, injection port 302 having a caliber (for example, φ 0.5 mm) that is smaller than the inner diameter of the cylinder (for example, φ 6 mm). The caliber of injection port 302 is smaller than the inner diameter of the cylinder of main body 301 because cooling wind is injected from injection port 302 at a high speed equal to or greater than a predetermined value (for example, 130 m/s) using a high wind pressure (for example, 20 kPa). Injection port 302 injects cooling wind delivered by wind blower 10 at a wind speed equal to or greater than a predetermined value.

When the caliber of injection port 302 is smaller than the inner diameter of main body 301 and the wind speed of the cooling wind injected from injection port 302 can be maintained at equal to or greater than a predetermined value, the inner diameter of the cylinder of main body 301, the wind pressure of cooling wind delivered by wind blower 10, and the value of the caliber of injection port 302 can be freely changed.

Spacer 303 and retaining ring 305 are ring-shaped parts that fix metal filter 304 inside main body 301. Metal filter 304 is a disc-shaped part that collects fine grains that the cooling wind, that is delivered from wind blower 10, contains. Foam filter 306 is a porous part that collects dust.

Metal filter 304 may be made of another material such as plastics as well as a metal.

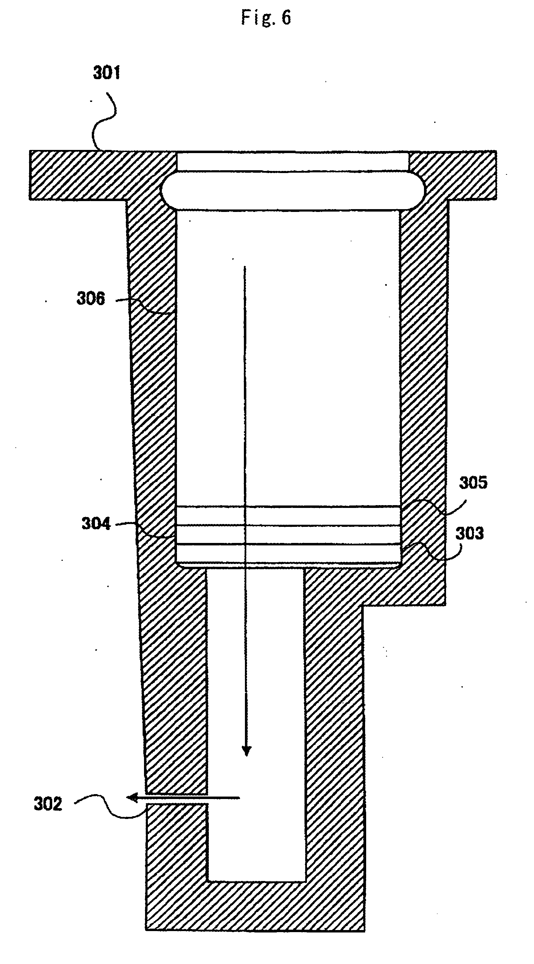

Main body 301 of injection member 30 accommodates these parts in the order of spacer 303, metal filter 304, retaining ring 305, and foam filter 306. Fig. 6 is a lateral sectional view of main body 301 that has accommodated spacers and so forth (303, 304, 305, and 306). Referring to the drawing, fine grains that cooling wind contains and that is delivered from wind blower 10 are first collected by foam filter 306 and then by metal filter 304 and then the cooling wind from which dust has been collected is injected from injection port 302.

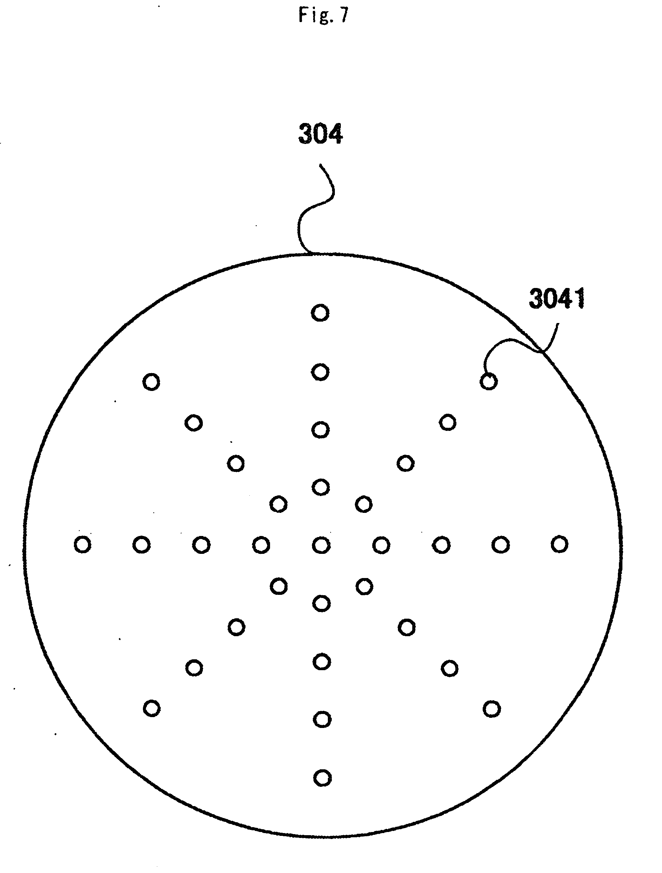

Fig. 7 is a front view of metal filter 304. Referring to the drawing, a plurality of punched holes 3041 have been formed in metal filter 304. The area of metal filter 304 is nearly equal to the inner diameter of main body 301 that is greater than injection port 302. The area of each of punched holes 3041 is required to be smaller than the area of injection port 302 so as to collect fine grains smaller than injection port 302.

The total area of punched holes 3041 is required to be 1 to 5 times greater than the area of injection port 302. The reason why the total area is required to be equal to or greater than 1 time is in that if the ratio is smaller than 1, the pressure loss caused by metal filter 30 becomes excessively large. The reason why the total area is required to be 5 times or smaller is in that if the ratio is greater than 5, the wind speed of cooling wind that passes through punched holes 3041 does not become a predetermined value (for example, 26 m/s),

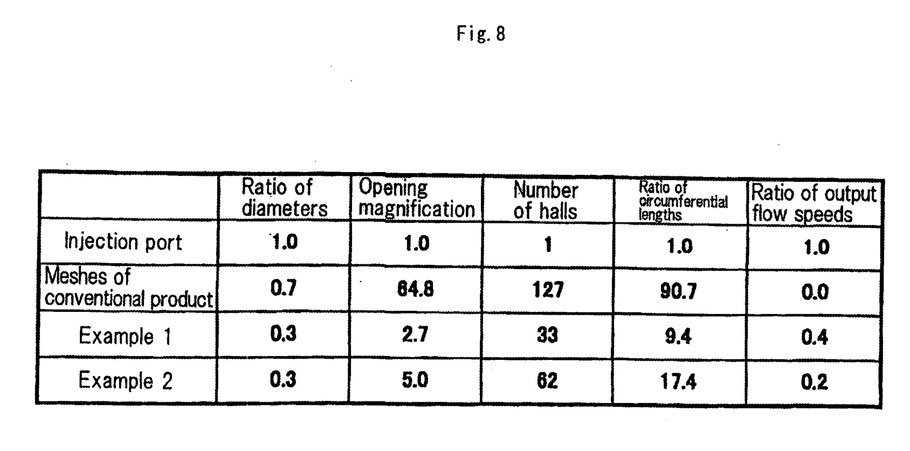

Fig. 8 is a table that compares the structure of filter 304 of this embodiment and the characteristics of the mesh-shaped filter disclosed in Document 1. In this drawing, "injection port" is injection port 302; "meshes of conventional product" is filter M described in Document 1 or Fig. 2; "Example 1" and "Example 2" are examples of metal filter 304. "Ratio of diameters" is the ratio of the diameter of holes formed in the filter to the diameter of injection port 302. "Opening magnification"' is the ratio of the total area of the holes formed in the filter to the area of injection port 302. "Number of holes" is the number of holes formed in the filter. "Ratio of circumferential lengths" is the ratio of the total circumference of the holes formed in the filter to the circumference of injection port 302. "Ratio of output flow speeds" is the ratio of the wind speed of cooling wind injected from the holes formed in the filter to the wind speed of cooling wind injected from injection port 302.

In "Example 1", the area of each of punched holes 3041 is around 30 % of the area of injection port 302 (ratio of diameters 0.3) and the total number of punched holes 3041 is 33. In this structure, since the total area of punched holes 3041 is around 2.7 times greater than the area of injection port 302 (opening magnification 2.7) and the ratio of output flow speeds is around 0.4, the wind speed of cooling wind that passes through punched holes 3041 is around equal to or greater than 52 m/s when the wind speed of the injection port is equal to or greater than 130 m/s. Thus, metal filter 30 can suppress the pressure loss to be equal to or lower than a predetermined level and obtain a wind speed that is equal to or greater than a predetermined value (26 m/s).

In contrast, in "Example 2", the area of each of punched holes 3041 is around 30 % of the area of injection port 302 and the total number of punched holes 3041 is 62. In this structure, since the opening magnification is around 5.0 and the ratio of the output flow speeds is around 0.2, metal filter 30 can suppress the pressure loss to be equal to or lower than a predetermined level and obtain a wind speed that is equal to or greater than a predetermined value (26 m/s).

When the area of each of punched holes 3041 is smaller than injection port 302 and the total area of punched holes 3041 is 1 to 5 times greater than the area of injection port 302, the size, the shape, or the number of holes of punched holes 3041 can be freely changed.

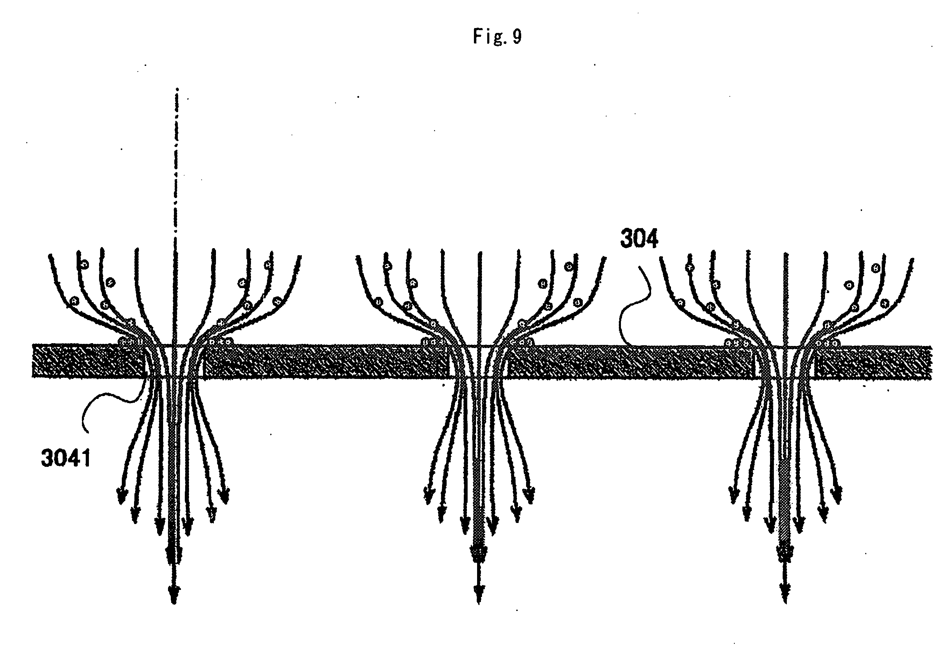

Next, the benefit obtained with a sufficient wind speed will be described with reference to Fig. 9. The drawing shows the flow of cooling wind in the vicinity of punched holes 3041 in the case in which the wind speed of gas that passes through punched holes 3041 is 20 % of the wind speed of gas that passes through injection port 302 (130 m/s), namely equal to or greater than 26 m/s. In the drawing, the path of the arrow represents the path of the flow of cooling wind; the length of the arrow represents the magnitude of the flow speed of gas. Referring to the drawing, when the flow speed of cooling wind that passes through the center portions of punched holes 3041 is equal to or greater than a predetermined value, the flow of cooling wind that passes through punched holes 3041 becomes faster than the flow of cooling wind that passes through the vicinity thereof and the pressure difference between the vicinity at which the flow is slow and the hole portion at which the flow is fast becomes large according to the Bernoulli principle, resulting in the flow of gas injected in a sharp curve from the vicinity of punched holes 3041 to punched holes 3041. When fine grains are injected along the path of the flow into punched holes 3041, fine grains touch and adhesively deposit on the surface of the vicinity of each of punched holes 3041.

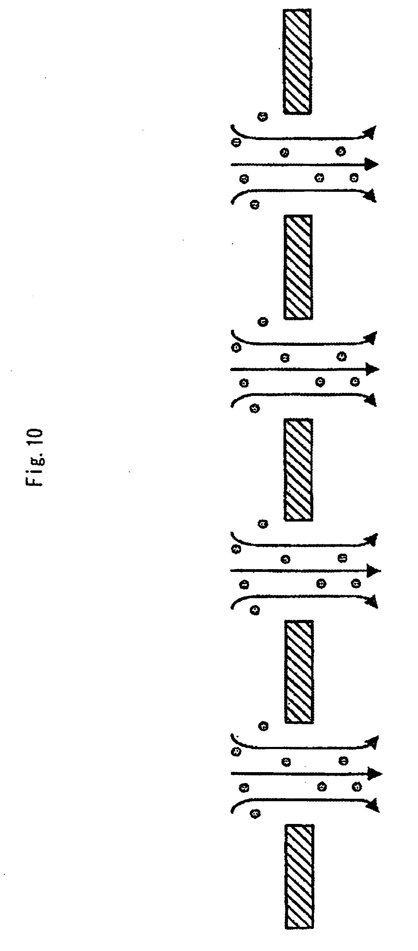

In contrast, when the total area of punched holes 3041 is greater than 5 times of the area of injection port 302, for example, in "meshes of conventional product" shown in Fig. 8, the opening magnification becomes 64.8, the ratio of output flow speeds becomes 0.0, and the wind speed becomes lower than 26 m/s. In this case, as shown in Fig. 10, since there is less difference between the speed of wind that passes through the holes and the speed of wind that passes through the vicinity thereof and since the pressure difference between the holes and the vicinity thereof is small, the curve of the flow of gas injected from the vicinity to the holes is gradual. Thus, since fine grains in gas pass through the holes without being deposited in the vicinity thereof, the filter cannot effectively collect them.

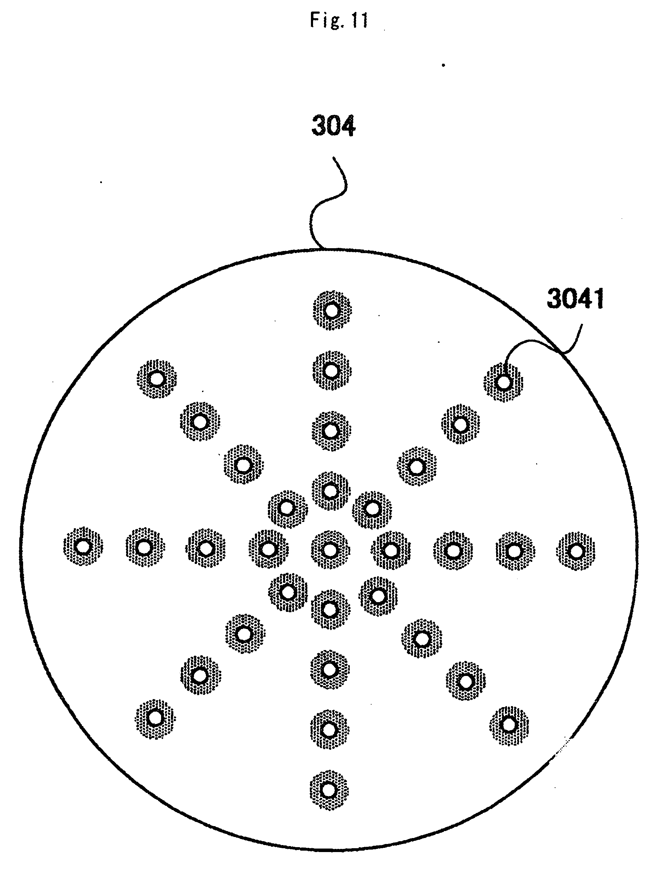

Fig. 11 is a front view of metal filter 304, viewed from the injection side of cooling wind when cooling system 1 has been operated for a predetermined time period. Referring to the drawing, since gas passed through punched holes 3041 at a wind speed equal to or greater than a predetermined value, fine grains in gas have been deposited in the vicinity of punched holes 3041.

Fine grains that foam filter 306 and metal filter 304 have not fully collected get deposited in the vicinity of injection port 302. This is because the wind speed of gas injected from injection port 302 is satisfactorily large, for example, equal to or greater than 130 m/s and the pressure difference between the center portions of the holes and the vicinity thereof becomes large as with the case shown in Fig. 9.

When the amount of fine grains that have been deposited on injection port 302 becomes equal to or greater than a predetermined amount, injection port 302 becomes clogged. The time period for which clogging takes place depends on the circumferential length of the holes through which gas passes at a wind speed that is equal to or greater than a predetermined value. Since fine grains get deposited in the vicinity of punched holes 3041 as well as on injection port 302, the time period for which the clogging takes place in the case in which metal filter 304 is provided is greater by the total of the circumferential lengths of punched holes 3041than that in the case in which metal filter 304 is not provided.

For example, as shown in "Example 1" of Fig. 8, when 33 punched holes 3041 having an area 0.3 times greater than that of injection port 302 are provided, the total of the circumferential lengths of punched holes 3041 becomes 9.4 times greater than the circumferential length of injection port 302, allowing the time period for which clogging takes place to become equal to or greater than 10 times.

As described above, according to this embodiment, metal filter 304 is disposed between wind blower 10 and injection port 302 that injects cooling wind delivered from wind blower 10 and in which a plurality of punched holes 3041 are formed; the area of metal filter 304 is greater than the area of injection port 302, the area of each of the plurality of punched holes 3041 is smaller than the area of injection port 302, and the total area of the plurality of punched holes 3041 is 1 to 5 times greater than the area of injection port 302. Thus, fine grains smaller than injection port 302 can be collected and while the pressure loss can be suppressed to be equal to or smaller than a predetermined value, the wind speed of cooling wind that passes through punched holes 3041 can be increased to be equal to or greater than a predetermined value. As a result, since fine grains get deposited in the vicinity of punched holes 3041, cooling system 1 can effectively prevent injection port 302 from becoming clogged.

### (Second Embodiment)

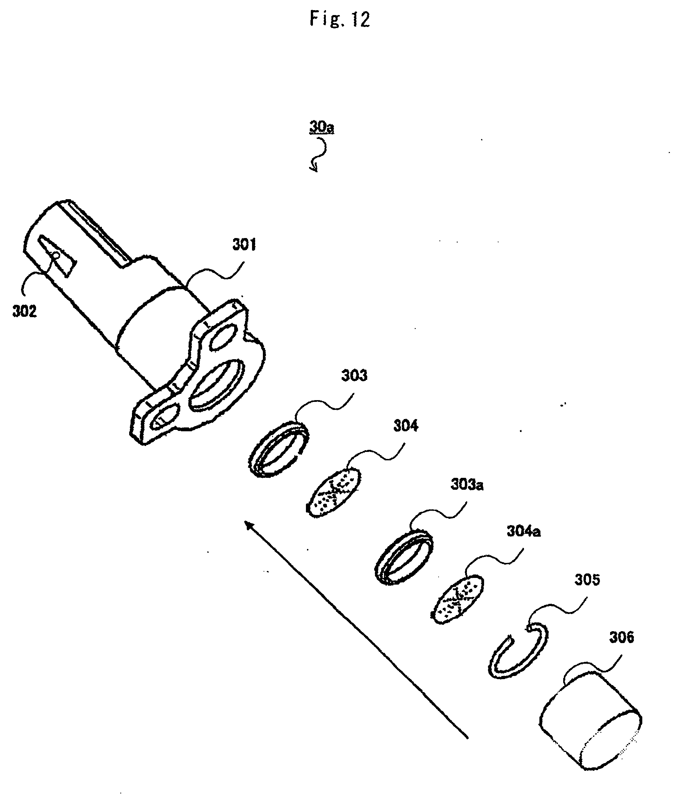

Next, a second embodiment of the present invention will be described with reference to Fig. 12 to Fig. 14. The second embodiment is different from the first embodiment in that injection member 30a is provided with a plurality of filters that are similar to metal filters 304.

Fig. 12 is a perspective view showing the structure of injection member 30a of this embodiment. Referring to this drawing, injection member 30a has a structure similar to that of injection member 30 of the first embodiment except that injection member 30a further has spacer 303a and metal filter 304a. Main body 301 of injection member 30a accommodates these parts in the order of spacer 303, metal filter 304, spacer 303a, metal filter 304a, retaining ring 305, and foam filter 306.

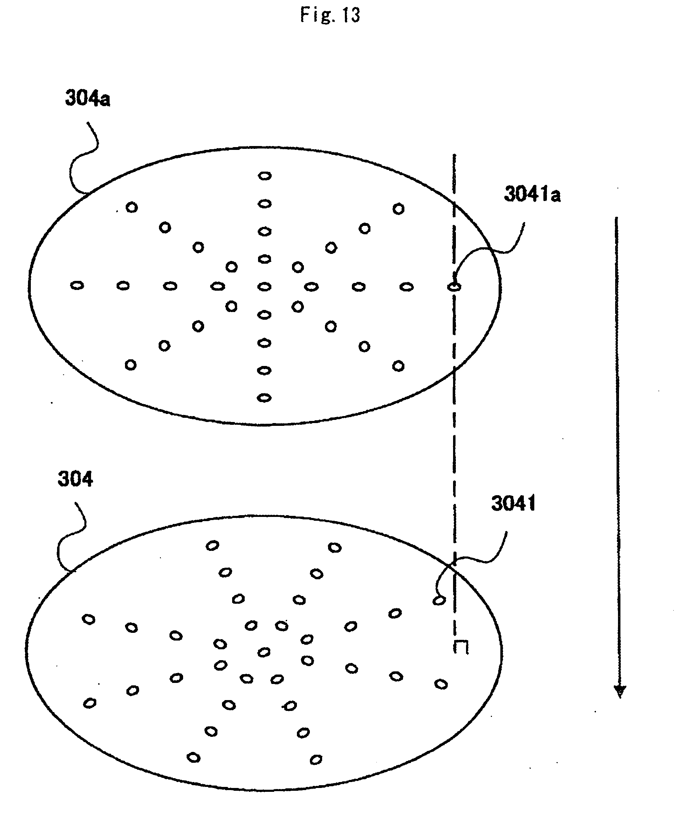

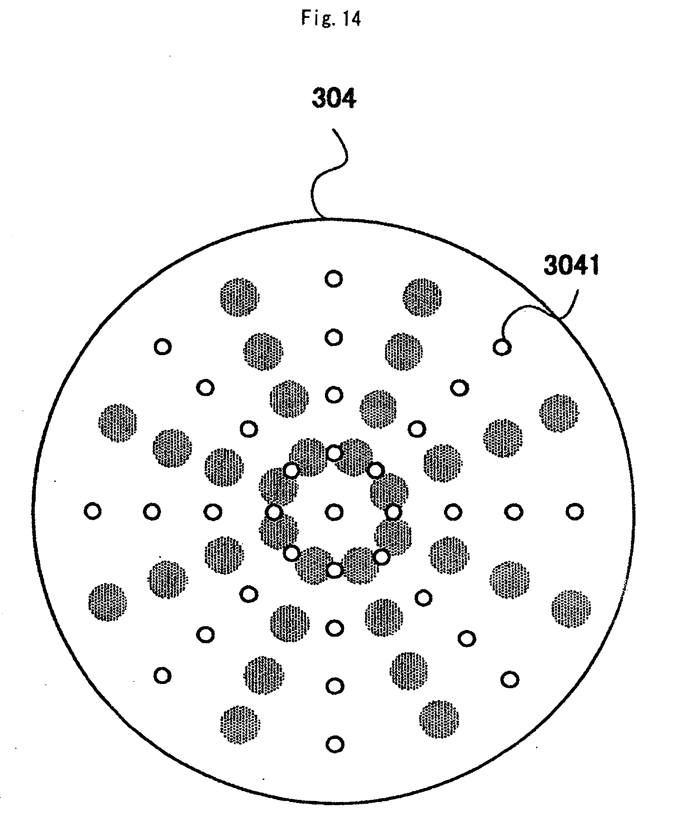

The structure of spacer 303a and metal filter 304a is similar to that of spacer 303 and metal filter 304. However, as shown in Fig. 13, metal filters 304 and 304a are fixed to injection member 30a in such a manner that the wind path of cooling wind that passes through punched holes 3041 is different from the wind path of cooling wind that passes through punched holes 3041 a formed in metal filter 304a except for a center hole. The arrow of the drawing represents the direction in which cooling wind is delivered. When metal filters 304 and 304a are fixed in such a manner, cooling wind that has passed through punched holes 3041a collides with a non-hole surface of metal filter 304. Thus, as shown in Fig. 14, fine grains get deposited at a portion with which cooling wind, that has passed through punched holes 3041a, collides.

As described above, according to this embodiment, since injection member 30a has a plurality of metal filters 304, 304a, it can securely remove fine grains.

In addition, since metal filters 304, 304a are fixed in such a manner that the path of wind that passes through punched holes 3041a is different from the path of wind that passes through punched holes 3041, cooling wind that has passed through punched holes 3041a collides with a surface other than punched holes 3041 of metal filter 304 and fine grains that have not been deposited in the vicinity of punched holes 3041a get deposited at the collided portion.

Alternately, of course, three or more filters that are similar to metal filters 304 may be provided in injection member 30a.

### (Third Embodiment)

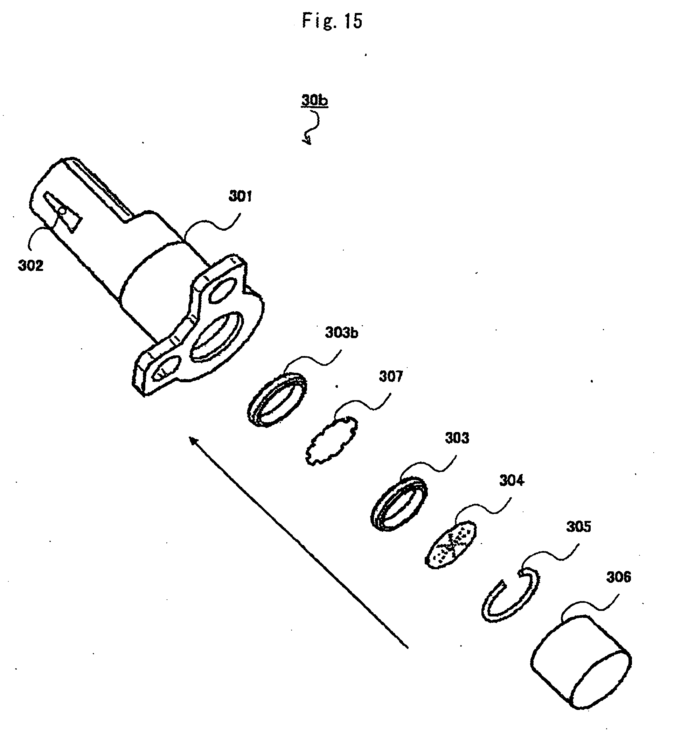

Next, with reference to Fig. 15 to Fig. 17, a third embodiment of the present invention will be described. The third embodiment is different from the first embodiment in that injection member 30b is also provided with masking plate 307.

Fig. 15 is a perspective view showing the structure of injection member 30b of this embodiment. Referring to the drawing, injection member 30b has a structure similar to that of injection member 30 of the first embodiment except that injection member 30b also has masking plate 307 and spacer 303b. Main body 301 of injection member 30b accommodates these parts in the order of spacer 303b, masking plate 307, spacer 303, metal filter 304, retaining ring 305, and foam filter 306.

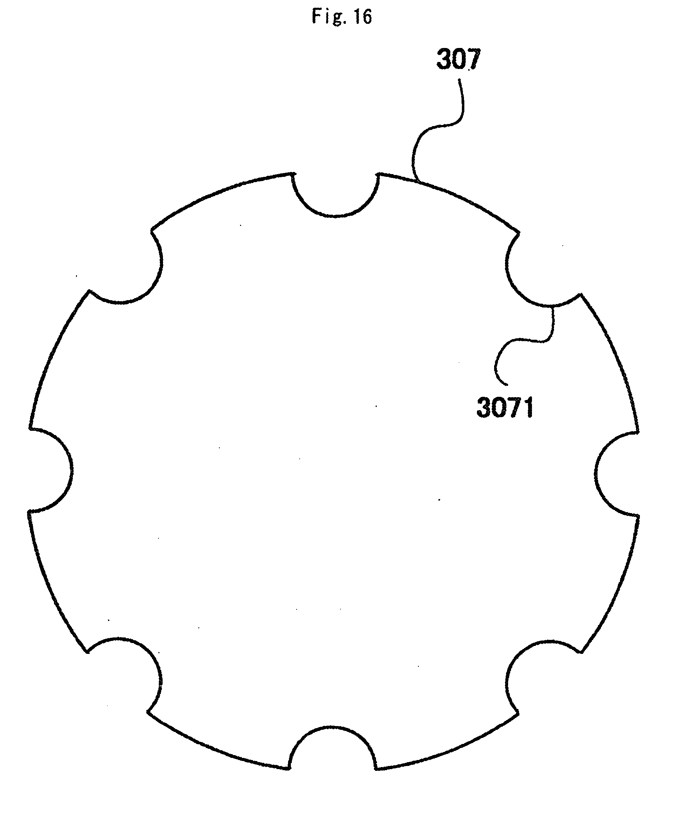

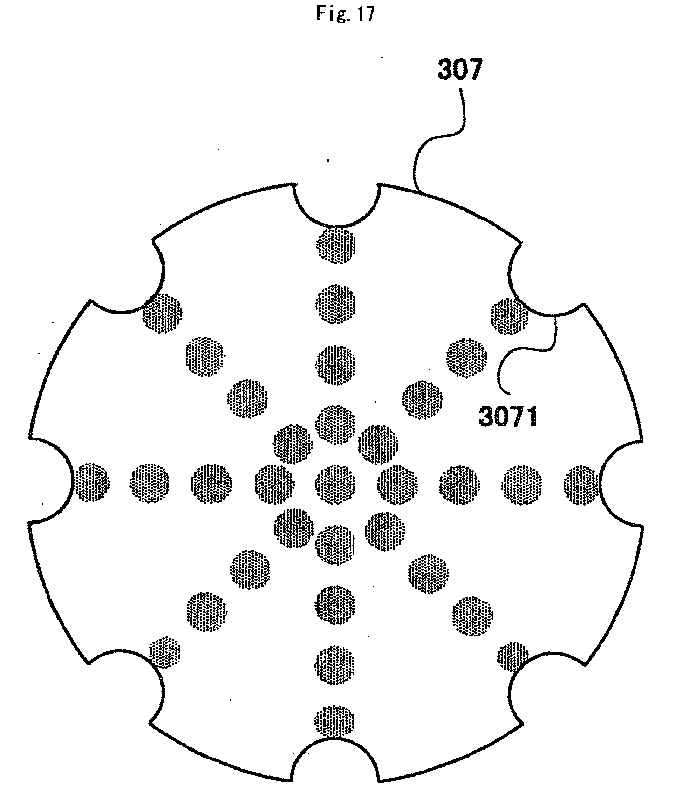

Spacer 303b is similar to spacer 303. Fig. 16 is a front view of masking plate 307. Referring to the drawing, masking plate 307 is a disc-shaped member whose outer circumferential portion has a plurality of notches 3071. Cooling wind that has passed through punched holes 3041 collides with a surface of masking plate 307, passes through notches 3071, and is injected from injection port 302. Thus, as shown in Fig. 17, fine grains get deposited at a portion of masking plate 307 with which cooling wind, that has passed through punched holes 3041, collides.

As described above, according to this embodiment, since cooling wind that has passed through punched holes 3041 is masked by masking plate 307 and fine grains that have not been deposited in the vicinity of punched holes 3041 a get deposited on masking plate 307, the dust collecting force of injection member 30b improves.

Parts that allow fine grains to get deposited are not limited to metal filter 304 and masking plate 307 exemplified in the above-described second embodiment and third embodiment, but may be parts in any shape provided between an injection port and a filter and that have a wall surface with which cooling wind, that has passed through the filter of the present invention, collides.

Now, with reference to the embodiments, the present invention has been described. However, it should be understood by those skilled in the art that the structure and details of the present invention may be changed in various manners without departing from the scope of the present invention.

## Claims

1. A cooling injection member, comprising:
a filter (304) in which a plurality of opening portions (3041) are formed and that allows cooling wind delivered from a wind blower (10) to pass through; and
an injection port (302) that injects said cooling wind that has passed through said filter (304),
wherein the area of said filter (304) is greater than the area of said injection port (302), the area of each of said plurality of opening portions (3041) is smaller than the area of said injection port (302), and the total area of said plurality of opening portions (3041) is 1 to 5 times greater than the area of said injection port (302).

2. The cooling injection member according to claim 1, further comprising:
a part having a wall surface with which cooling wind that passes through said opening portions (3041) collides, said part being disposed between said filter (304) and said injection port (302).

3. The cooling injection member according to claim 1, further comprising:
a masking plate, on whose outer circumference notch portions are formed and that masks the and path of said cooling wind that passes through said opening portions (3041).

4. The cooling injection member according to any one of claims 1 to 3, further comprising:
a plurality of said filters (304).

5. The cooling injection member according to claim 4,
wherein said plurality of filters (304) are fixed to said cooling injection member in such a manner that the wind path of said cooling wind, that passes through said opening portions (3041) formed in one of said plurality of filters (304), is different from the wind path of said cooling wind that passes through said opening portions (3041) formed in another one of said plurality of filters (304).

6. A cooling wind injection method, comprising:
providing a wind blower (10) and a filter (304) disposed between said wind blower (10) and an injection port (302) that injects cooling wind delivered from said wind blower (10) and in which a plurality of opening portions (3041) are formed;
causing the area of said filter (304) to be greater than the area of said injection port (302);
causing the area of each of said plurality of opening portions (3041) to be smaller than the area of said injection opening; and
causing the total area of each of said plurality of opening portions (3041) to be 1 to 5 times greater than the area of said injection port (302).

7. The cooling wind injection method according to claim 6, further comprising:
providing a part having a wall surface with which cooling wind that passes through said opening portions (3041) collides, said part being disposed between said filter (304) and said injection port (302).

8. The cooling wind injection method according to claim 6, further comprising:
providing a masking plate, on whose outer circumference notch portions are formed and that masks the wind path of said cooling wind that passes through said opening portions (3041).

9. The cooling wind injection method according to any one of claims 6 to 8, further comprising:
providing a plurality of said filters (304).

## Patentansprüche

1. Injektionskühlelement, umfassend:
einen Filter (304), in welchem eine Mehrzahl von Öffnungen (3041) gebildet sind und der Kühlluft durchlässt, welche durch ein Gebläse (10) geliefert wird; und
eine Injektionsöffnung (302) welche die Kühlluft injiziert, die den Filter (304) passiert hat,
wobei die Fläche des Filters (304) größer ist als die der Injektionsöffnung (302), die Fläche jeder einzelnen aus der Mehrzahl von Öffnungen (3041) kleiner ist als die Fläche der Injektionsöffnung (302) und die gesamte Fläche der Mehrzahl von Öffnungen (3041) 1- bis 5-mal größer als die Fläche der Injektionsöffnung (302) ist.

2. Injektionskühlelement gemäß Anspruch 1, weiterhin umfassend:
einen Bestandteil mit einer Wandoberfläche, auf welche die Kühlluft, die die Öffnungen (3041) passiert, trifft, wobei dieser Bestandteil zwischen dem Filter (304) und der Injektionsöffnung (302) angeordnet ist.

3. Injektionskühlelement gemäß Anspruch 1, weiterhin umfassend:
eine Abdeckplatte, an deren äußerem Umfang Kerben gebildet sind und die den Luftstrom der Kühlluft, welche die Öffnungen (3041) passiert, abdeckt.

4. Injektionskühlelement gemäß einem der Ansprüche 1 bis 3, weiterhin umfassend:
eine Mehrzahl der Filter (304).

5. Injektionskühlelement gemäß Anspruch 4,
wobei die Mehrzahl von Filtern (304) derart an dem Injektionskühlelement befestigt ist, dass der Luftstrom der Kühlluft, welcher die Öffnungen (3041) passiert, die in einem der Mehrzahl von Filtern (304) gebildet sind, sich von dem Luftstrom der Kühlluft unterscheidet, der die Öffnungen (3041) passiert, die in einem anderen der Mehrzahl von Filtern (304) gebildet sind.

6. Verfahren zur Kühlluftinjizierung, umfassend:
Bereitstellen eines Gebläses (10) und eines Filters (304), welcher zwischen dem Gebläse (10) und einer Injektionsöffnung (302) angeordnet ist, die Kühlluft injiziert, die von dem Gebläse (10) geliefert wird, und in welchem eine Mehrzahl von Öffnungen gebildet ist;
Bewirken, dass die Fläche der Filter (304) größer ist als die Fläche der Injektionsöffnung (302);
Bewirken, dass die Fläche jeder einzelnen aus der Mehrzahl von Öffnungen (3041) kleiner ist als die Fläche der Injektionsöffnung; und
Bewirken, dass die gesamte Fläche der Mehrzahl von Öffnungen (3041) 1- bis 5-mal größer ist als die Fläche der Injektionsöffnung (302).

7. Verfahren zur Kühlluftinjizierung gemäß Anspruch 6, weiterhin umfassend:
Bereitstellen eines Bestandteils mit einer Wandoberfläche, auf welche die Kühlluft trifft, die die Öffnungen (3041) passiert, wobei dieser Bestandteil zwischen dem Filter (304) und der Injektionsöffnung (302) angeordnet ist.

8. Verfahren zur Kühlluftinjizierung gemäß Anspruch 6, weiterhin umfassend:
Bereitstellen einer Abdeckplatte, an deren äußerem Umfang Kerben gebildet sind und die den Luftstrom der Kühlluft, welche die Öffnungen (3041) passiert, abdeckt.

9. Verfahren zur Kühlluftinjizierung gemäß einem der Ansprüche 6 bis 8, weiterhin umfassend:
Bereitstellen einer Mehrzahl der Filter (304).

## Revendications

1. Organe à jet de refroidissement, comprenant :
un filtre (304) dans lequel une pluralité de portions d'ouverture (3041) sont formées et qui permet à un vent de refroidissement fourni par une soufflante (10) de le traverser ; et
un orifice d'injection (302) qui injecte ledit vent de refroidissement qui a traversé ledit filtre (304),
dans lequel l'aire dudit filtre (304) est plus grande que l'aire dudit orifice d'injection (302), l'aire de chacune de ladite pluralité de portions d'ouverture (3041) est plus petite que l'aire dudit orifice d'injection (302), et l'aire totale de ladite pluralité de portions d'ouverture (3041) est de 1 à 5 fois supérieure à l'aire dudit orifice d'injection (302).

2. Organe à jet de refroidissement selon la revendication 1, comprenant en outre :
une partie ayant une surface de paroi que le vent de refroidissement qui traverse lesdites portions d'ouverture (3041) vient heurter, ladite partie étant disposée entre ledit filtre (304) et ledit orifice d'injection (302).

3. Organe à jet de refroidissement selon la revendication 1, comprenant en outre :
une plaque de masquage, sur la circonférence externe de laquelle des portions d'encoche sont formées et qui masque le trajet de vent dudit vent de refroidissement qui traverse lesdites portions d'ouverture (3041).

4. Organe à jet de refroidissement selon l'une quelconque des revendications 1 à 3, comprenant en outre :
une pluralité desdits filtres (304).

5. Organe à jet de refroidissement selon la revendication 4,
dans lequel ladite pluralité de filtres (304) sont fixées audit organe à jet de refroidissement de telle sorte que le trajet de vent dudit vent de refroidissement, qui traverse lesdites portions d'ouverture (3041) formées dans un des filtres de ladite pluralité de filtres (304) est différent du trajet de vent dudit vent de refroidissement qui traverse lesdites portions d'ouverture (3041) formées dans un autre filtre de ladite pluralité de filtres (304).

6. Procédé d'injection de vent de refroidissement, comprenant :
fournir une soufflante (10) et un filtre (304) disposé entre ladite soufflante (10) et un orifice d'injection (302) qui injecte du vent de refroidissement fourni par ladite soufflante (10) et dans lequel une pluralité de portions d'ouverture (3041) est formée ;
amener l'aire dudit filtre (304) à être plus grande que l'aire dudit orifice d'injection (302) ;
amener l'aire de chacune des portions de ladite pluralité de portions d'ouverture (3041) à être plus petite que l'aire dudit orifice d'injection : et
amener l'aire totale de chacune des portions de ladite pluralité de portions d'ouverture (3041) à être une à 5 fois plus grande que l'aire dudit orifice d'injection (302).

7. Procédé d'injection de vent de refroidissement selon la revendication 6, comprenant en outre :
fournir une partie ayant une surface de paroi que le vent de refroidissement qui traverse lesdites portions d'ouverture (3041) vient heurter, ladite partie étant disposée entre ledit filtre (304) et ledit orifice d'injection (302).

8. Procédé d'injection de vent de refroidissement selon la revendication 6, comprenant en outre :
fournir une plaque de masquage, sur la circonférence externe de laquelle des portions d'encoche sont formées et qui masque le trajet de vent dudit vent de refroidissement qui traverse lesdites portions d'ouverture (3041).

9. Procédé d'injection de vent de refroidissement selon l'une quelconque des revendications 6 à 8, comprenant en outre :
fournir une pluralité desdits filtres (304).
